# EUROPEAN PATENT SPECIFICATION

(11) **EP 1 141 805 B1**
(45) Date of publication and mention of the grant of the patent: **07.05.2008**
(21) Application number: 00901364.0
(22) Date of filing: 10.01.2000
(51) Int. Cl.: G06F 21/00, G06F 12/14

(54) **SYSTEM FOR PROCESSING A SECURITY CRITICAL ACTIVITY**
SYSTEM ZUR VERARBEITUNG EINER SICHERHEITSKRITISCHEN AKTIVITÄT
SYSTEME PERMETTANT DE TRAITER EN MODE INFORMATIQUE UNE ACTIVITE CRITIQUE EN MATIERE DE SECURITE

(30) Priority: 11.01.1999 SE 9900051; 11.01.1999 US 115488 P
(43) Date of publication of application: 10.10.2001
(73) Proprietor: Myspace Ab, 113 34 Stockholm (SE)
(72) Inventor: WETTERGREN, Christian, S-116 65 Stockholm (SE)
(74) Representative: Örtenblad, Bertil Tore
(86) International application number: PCT/SE2000/000027
(87) International publication number: WO 2000/042490

(56) References cited:
- EP-A1- 0 171 456
- US-A- 4 685 056
- US-A- 5 263 147
- US-A- 5 343 524
- US-A- 5 432 950
- US-A- 5 559 993

## Description

### TECHNICAL AREA

The present invention relates to a system for data processing a security critical activity in a secure management mode in a computer, which computer comprises a processor, handling devices, memory storage means, hereafter named resources.

### BACKGROUND OF THE INVENTION

Advances in computer and communications technology have increased the flow of information between and within computer networks. This ability to communicate between computers and networks has also made it possible to develop a wide variety of services that can be performed from your own personal computer. Such services may for example be mailing, home shopping, home banking etc. Many of these services comprise security critical activities that have to be performed when the computer is on-line, such as transferring money through Internet.

Performing such security critical activities, is of course a security risk, since also potential intruders can listen to and/or compromise these security critical activities, by breaking into the computer. One of the reasons for this is that the operating systems of personal computers were not designed with security in mind, since they were personal and without connections to any network. Thus, it is easy to use malicious code, Trojan horses or the like to compromise the operating system of a personal computer and thereby the security critical activities executed thereon. Also more secure operating systems, such as Unix, may be compromised with a relatively small effort. Today there is no commercial operating system that protects the user from Trojan horses.

To increase the security of the operating system there has been suggested to provide firewalls between the local network and the public available networks open to any intruders. Such firewalls filter the communication between the local network and the outside world by only allowing certain selected services to pass through. If other services are requested the passing through the firewall will only be enabled if a valid password is presented. The communication then eventually reaches either a personal computer or a server computer inside the local network. This safety measure will of course increase the security, but will still not guarantee that the security critical activities are performed the way the user initially intended. Vulnerabilities in the implementation of the allowed, non-filtered, services may allow an intruder to intrude into the personal computer.

Another possible security measurement is to insert security mechanisms in the operating system, like requiring passwords for access to certain services.

The main reason why the above security mechanisms are not totally safe is that they are software based. Since software always contains bugs, it is corruptible, and may therefore be compromised by exploited security holes, malicious code, resident Trojan horse software etc. Software based security solutions are also too brittle, i.e. if the operating system security is compromised all data and all applications that are executed thereon will also be compromised.

One different, but similar approach to increase the operating system security is to build a so called multi level secure (MLS) operating system. Such systems label objects and subjects according to a security classification, and define rules for how information is allowed to flow through the system. The classification of different security levels and the record keeping of which users that have access to different security levels and objects is very time consuming to maintain. Furthermore, conventional personal computer applications are not compatible with the operating systems of the MLS system, and all applications have to be tailor-made for the MLS system. This is of course very costly.

A method for performing or executing security critical activities in a computer is disclosed in WO 98/19243 with the same inventor as for the present invention. The system comprises a security device to be connected to the communications means of a personal computer, like a serial port or the PCI bus. The security device comprises a processor, memory and crypt means. Certain selected IO devices of the computer, such as the screen, keyboard, mouse and smart card reader are provided with switches and crypto means. During normal activity (normal mode) the security device is not active and the computer functions as normal. The presence of the security device and the switching and crypto means are transparent to the computer.

When a security critical activity is initiated by a signal from the computer processor, the computer is switched to secure management mode. The security device gains control over the selected user IO devices through the switching and crypto means and shuts out the computer processor from access. The execution of the security critical activity is tranferred to the security device and executed there with proper user involvement. Data is protected from the computer processor during transfer between the security device and the user IO devices.

The security device must be constructed so that the execution of the security critical activity can be performed securely without any possibility for the computer processor to compromise the execution. The above described system accomplishes this by having a separate processor, separate program memory, separate data memory and several other devices and controllers separate.

Unfortunately, this is an expensive solution, since so many functional circuits need to be duplicated. It would be preferable if for example access to a part of the existing PC memory could be divided off for the security device. This would be a major cost benefit, since suitable memory circuits usually only are provided in large sizes. This would also allow for flexibility, since the security device could divide off as much memory from the large PC-memory as needed for the security activity.

There are several other resources in a PC which could be divided off from the PC's normal control and usage, for protected usage by the security device; devices in specific slots on the PCI bus or the ISA bus, whole storage devices or sectors on storage devices on a IDE bus, logical devices on an USB bus. It is important for the security device to minimize the number of hardware mechanisms both the computer processor and the security device can control, since unexpected and dangerous interactions might be performed by the computer processor. On the other hand, we clearly see the cost benefit arising from the ability for protected usage by the security device of existing PC resources. The presence of the security device should also cause minimal changes to the computer processor's normal mode, for compatibility reasons.

US 5,263,147 shows a system, where a security critical activity is processed in the processor of a computer. There is also a security device having a processor, but this processor only has the function to check all activities taken by said processor of said computer.

US 5,343,524 shows a software copy protection device, which device must be activated together with a computer software in a computer in order to be able to run the computer software on the computer.

### SUMMARY OF THE INVENTION

The object of the invention is to provide a system for data processing a security critical activity in a secure management mode in a computer, which computer comprises a processor, handling devices, memory storage means, hereafter named resources; that the system comprises a security device comprising a processor and signal generators (SG_{PM}, SG_{A}), a number of control means, hereafter named switches, with signal receivers (SR_{A}, SR_{PM}) arranged respectively between the security device and the pre-selected resources, that the switches contain information regarding accessibility to and from the resources, or parts of the resources, hereafter named resource ranges, characterised in that the security processor is arranged to execute the security critical activity, in that the switch controls requests from the computer processor to the resources or resource ranges depending on the information contained in the switch, and in that in response to a call from the computer processor or the handling devices, the switches are activated by receiving a signal (SG_{PM}) from the security device, enabling the security device access to and from the resources or resource ranges selected by the security device, and denying the computer processor access to and from the resources or resource ranges selected by the security device, in that the signal (SG_{PM}) can be generated only by the security device and in that the security device comprises a signal generator (SG_{A}), wherein, when a switch receives a signal (SG_{A}), together with new information (addresses, operation, data), the security device is able of altering the content of the information of that switch.

According to a further aspect of the invention it is characterised in that the information contained in the switches controls other possible processors contained in or connected to the computer.

According to another aspect of the invention, it is characterised in that the security device comprises a signal generator, wherein, when a switch receives a signal, the security device is able of altering the content of the information of that switch..

According to another aspect of the invention it is characterised in that the information in the switch enables the switch to control certain areas of the memory means are allocated to be accessed by the processor of the security device only and in that the information in the switch enables the switch to control that certain resources are accessible by the computer processor when not in secure management mode, and only accessible by the security device when in secure management mode.

According to yet an aspect of the invention it is characterised in that the switches are hardware switches.

The advantage with a system according to the invention is that security critical activities may be performed securely and utilising the existing memory and device means already present in the computer. By arranging switches at certain locations, such as connection points to different resources, the fact that the switches contain information regarding accessibility from the processors in different situations, and controlling the switches by the security device, the security device has full control over the computer when a security critical activity is to be performed. At the same time, the switches allows the computer processor to gain access to certain resources that the security device is not using. The security device can select the appropriate resources, i e activate only those switches associated with the resources that are needed for the actual operation. The control of the resources by the switches enables a configuration where certain memory areas are allocated to the security device only, by which it is ensured that no compromised data may never enter the security system.

The security device is also able of altering the information contained in the switches depending on the actvities to be performed which allows for a large degree of flexibility.

By using hardware switches, the security system may be built in "from the start", i e to a large extent integrated in the hardware of the computer such as the bridges. In all a cost effective and secure system is obtained by the present invention.

These and other aspects of and advantages with the present invention will be apparent from the detailed description of an embodiment and the patent claims.

### SHORT DESCRIPTION OF DRAWINGS

In the following detailed description of an example of an embodiment reference will be made to the accompanied drawings, in which
- Fig. 1: shows a block diagram of the architecture of a pentium pro computer,
- Fig. 2: of the configuration of a switch comprised in the system according to the invention,
- Fig. 3: shows an example of memory handling of a main memory in a computer according to of the invention,
- Fig. 4: - shows an example handling a PCI bus according to the invention, and
- Fig. 5: shows an example of handling an USB bus according to the invention.

### DETAILED DESCRIPTION OF AN EXAMPLE OF EMBODIMENT

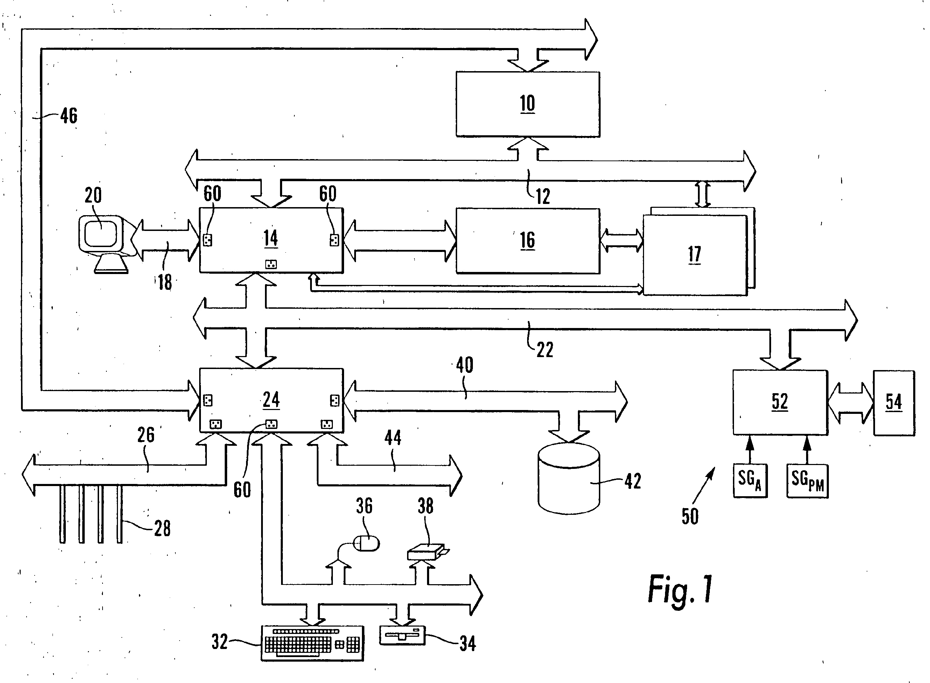

In Fig. 1 the reference sign 10 denotes a processor unit. The processor unit is equipped with an internal cache memory in a conventional manner. In this respect it is to be noted that even though one processor unit is depicted on Fig. 1, there could be a number of processors working in parallel. The processor unit is signally connected to a host bus 12. To the host bus a Host/PCI Bridge 14 is connected, in some applications referred to as the North Bridge. In some applications it may be divided into two bridges, referred to as the compatibility and the auxiliary PCI bridges. In that respect the bridges act as intermediaries in the communication between the devices on different buses and the processor. To the Host/PCI bridge a main DRAM 16 (Dynamic Random Access Memory) is connected for temporary read/write instructions to and from the processor unit. The memory is also connected to and controlled by two Data Paths 17. which in turn are connected to the Host/PCI Bridge and the Host bus.

An AGP connection 18 (Accelerated Graphics Port) is arranged between the Host/PCI Bridge and a screen controller and a monitor 20.

A PCI Bus 22 is connected to the Host/PCI Bridge and to the PCI Bus an E/ISA Bridge 24 is connected, in some applications referred to as the South Bridge. To the E/ISA Bridge a number of different buses can be connected. In Fig. 1 are shown the ISA Bus 26 to which a number of card slots 28 are connected, which slots may be used for sound cards, network cards and the like; the USB Bus 30 to which e g keyboard 32, floppy drives 34, mouse 36 and smart card reader 38 are connected; the IDE Bus 40 to which e g hard disk drives 42 are connected, and the X Bus 44. In case of a multi processor system, i e with more than one processor, a bus 46 is also arranged between the E/ISA Bus and the processor unit, the APIC Bus (Advanced Programmable Interrupt Controller). The function of the APIC Bus is to manage interrupt requests from IO devices to the processors.

To the PCI Bridge a security device 50 is connected. The security device comprises a processor 54 capable of performing certain commands, which will be described in detail below. A ROM memory 54 is connected to the processor. The security device is further provided with signal generators SG_{A} and SG_{PM}, the function of which will be explained below. At certain locations control means, hereafter named switches 60, are arranged in the hardware of the computer. According to the invention one switch is arranged at the connecting point of the main memory to the Host/PCI Bridge. Further switches may be arranged at the connection point between the bridges and the buses and/or to a number of different devices of the computer such as the graphics display card, the keyboard, the hard disk drive an such. Conveniently, the switches that are connected to different buses, may be integrated in the bridges. For instance for a hard disk drive connected to the IDE Bus, the switch is arranged on the E/ISA Bridge at the connection of the Bus.

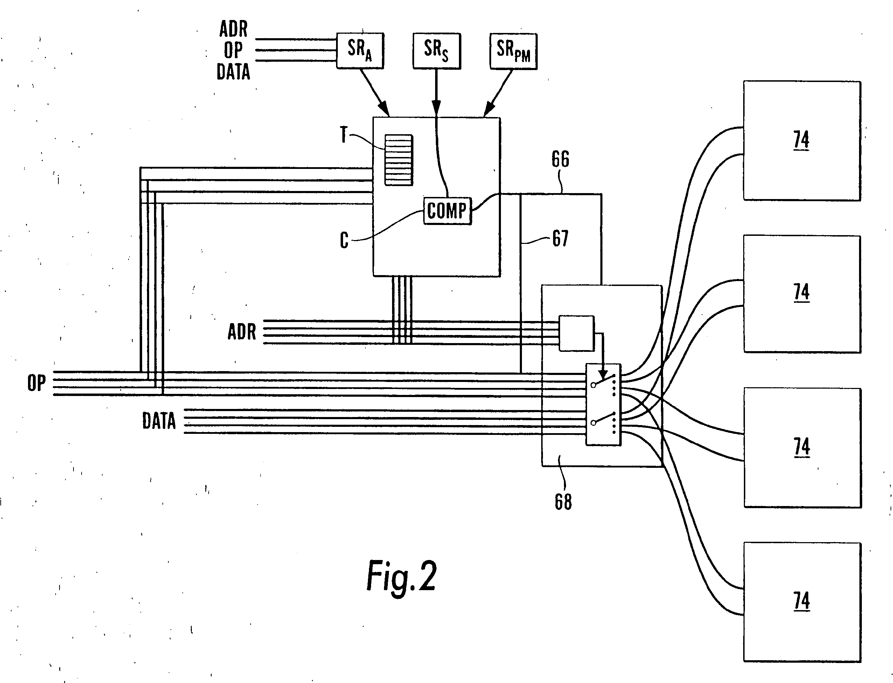

Figure 2 shows an example of a switch incorporated in a system. A switch 60 is connected to the address and operation lines ADR, OP of a bus. The ADR and OP lines are further connected to a "director" 68. The switch is further provided with a number signal receivers SR_{A} (alter), SR_{S} (source) and SR_{PM} (protection mode). The function of the director and the signal receivers will be described below. An enable/abort line 66 is arranged between the switch and the director 68. The director is further connected to different resources or resource ranges 74. In this respect it is to be noted that the word resources means devices such as the hard disk, keyboard and such, and the word resource ranges means for example part of a memory.

The switch contains a table T of addresses to the different resources and a comparator C whose functions will be described below. The table also contains information regarding access to the different resources.

As an example, the resource could be a memory. If the computer is running in normal mode, the computer processor is active and the security device processor is passive, which is detected by the switch via the signal receiver SR_{S} receiving a source signal. When the computer processor requests access to the memory, the addresses are checked by the switch and the sources of the request compared with the sources signal by the comparator C. There are then two scenarios regarding the access. Either some of the memory area, a resource range, is only allocated to the security device as specified in the table T, in which the switch then denies the computer processor access to these areas, or the computer processor could have access if in normal mode. Depending on the requests from the computer processor and the accessibility granted by the switch, data and operation signals are directed to and from the requested resource or completely denied.

If a security critical activity is ordered, and the security device requests that the system enters a secure management mode, a signal is sent by the security device from the signal generator, SG_{PM}, to the protection mode signal receiver SR_{PM} of the switch. Depending on the information in the switch, access by the computer processor to resources controlled by the switch can be withdrawn further when entering into secure management mode. These resources will then be solely available to the security device processor, according to the information in the switch. The switch controls, in the-embodiment shown in Fig. 2, the accessibility to the different sources 74 with the director 68 depending on the requests via the enable/abort line 66. In some cases, the unit requesting an operation, which is denied by the switch, needs to know that access was denied. Therefor, a line 67 is connected between the enable/abort line 66 and the operation lines so as to provide information to be sent back to the unit.

Depending on the security critical activity to be performed, the content of the table T of the switch may have to be altered. It could be either that the security device does not need a certain resource for the activity and may allow the computer processor to use it, or deny the computer processor access to a resource. In that case, a signal is sent from an Alter Signal Generator, SGA of the security device to the Alter Signal receiver, SRA of the appropriate switches, together with addresses, operations and data. It is to be understood that only the security device is able of changing the content of the switch in this way.

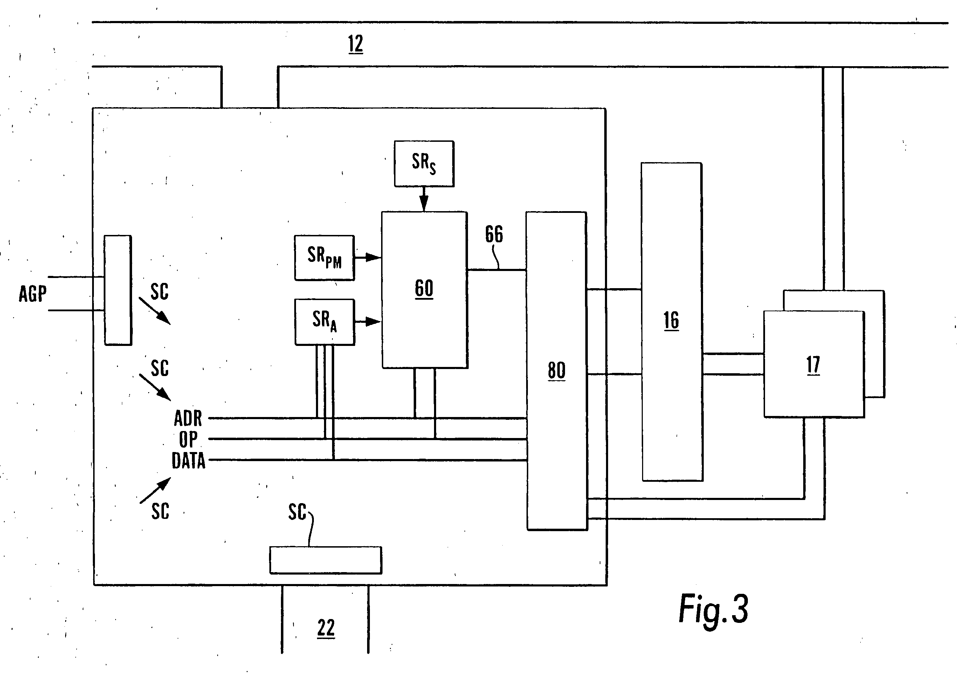

An example of memory access is shown in Fig. 3. Here a switch 60 is connected to the RAM controller function block 80. If in normal mode, the switch functions, according to the content of the table, so as to allow the security device processor to access the memory area allocated only to the security device while the rest of the memory area is accessible by the computer processor. Some memory area, that in normal mode is accessible by the computer processor, may be allocated to the security device processor only when in protection mode. The switch handles memory requests from different sources SC and allows or denies access according to the mode and source. As opposed to the switch of Fig. 2, no director is needed since there is only one source, the DRAM, and the switch enables or disables access via line 66.

The same general operation as described above may be obtained with other kinds of resources such as the screen controller. In normal mode the computer processor has full access to the screen controller, but may be denied access completely when in protection mode, in order to ensure that only "secure" data is shown on the screen.

In the example shown in Fig. 2 the switch is activated by physically separate signals from the SG_{PM} and SG_{A} to the SR_{PM} and SR_{A} respectively, which is easily obtainable with multi-line buses. However, physically separate signals via lines might need to be propagated between different bus types by controllers like the North and South Bridges, for example. These controllers also might need to translate the signal between different formats for different buses or packet formats. The controllers/translators are preferably arranged at the connection point between the PCI bus and the North and South bridges respectively. It is also to be understood that they could be arranged in the switches.

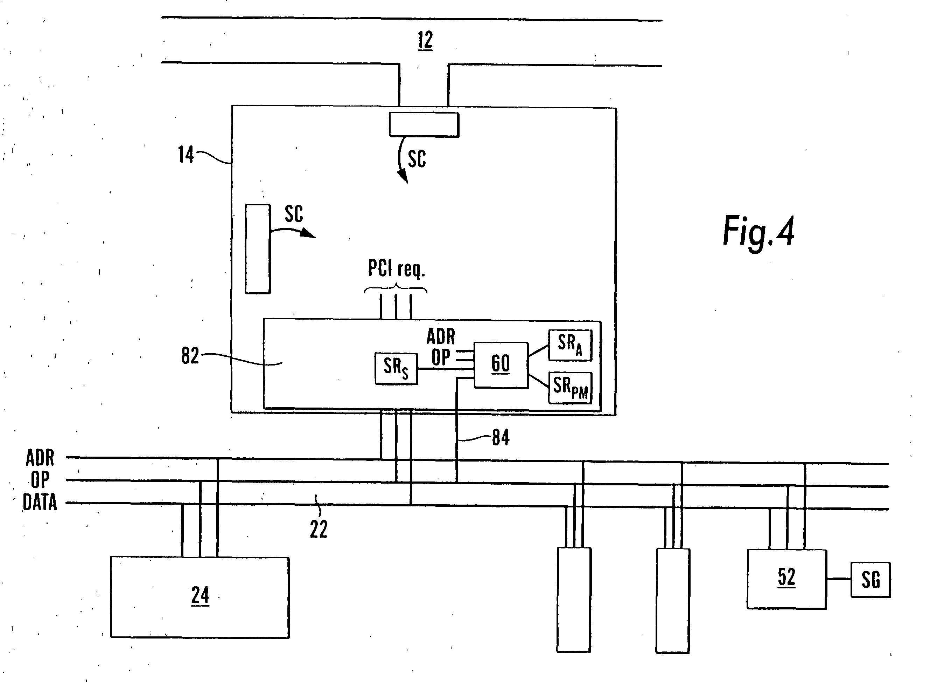

Figure 4 shows an example of a switch controlling the PCI bus 22. In this case the switch is a part of the PCI controller function block 82. The switch is not placed between the requesting source and the resource. Instead it "surveys" the PCI bus. If, according to the content of the switch, a request for access to a resource is made by a source, which is not allowed, the switch generates an "illegal" signal via the line 84 to the bus, thereby denying access for that source. In the same way as above, signals are sent by the security device to the switch for entering a protection mode or altering the contents of the table of the switch.

Some devices that the security device wishes to control in protection mode may be connected to serial buses, such as keyboard, mouse, card reader and such. In those cases, depending on how the information is transmitted on the bus, the signals from the security device may be sent together with the rest of the information. If the information is sent in packages containing address, operation and data, one part of the package contains the signals to the switch. If on the other hand the information is divided into smaller packages "sub packages", i e one package containing addresses, one package containing data, and so forth, one sub package contains the signals to the switch.

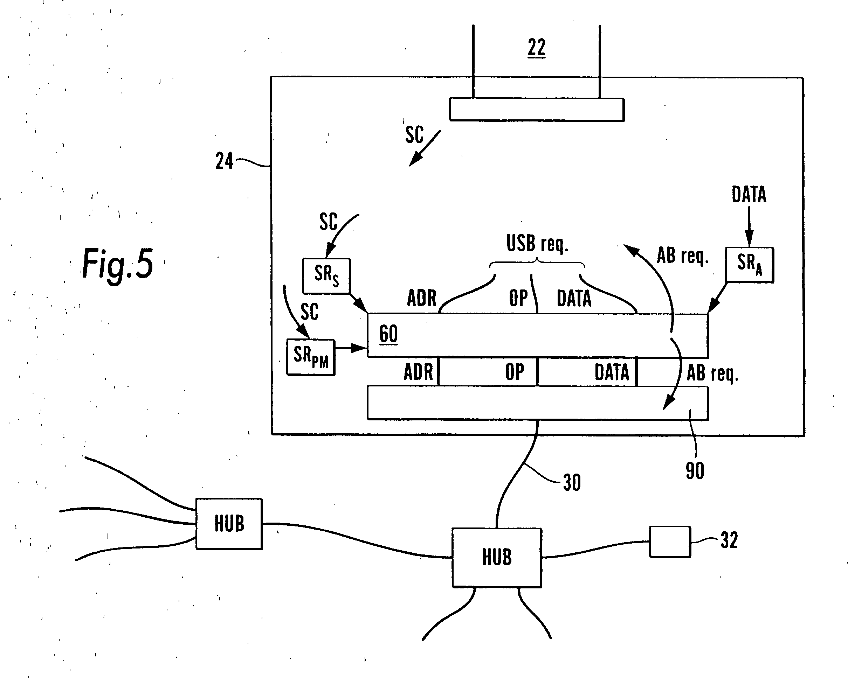

Figure 5 shows an example of a switch 60 controlling a USB bus. Here the switch is arranged between the USB requests and the USB controller function block 90. Depending on the requests from the different sources, and the content of the switch and the mode, the switch may allow access or send an abort request back to the source.

A further alternative is that a switch is arranged at the connection between for example the E/ISA Bridge and the serial bus and functioning in the way described above. In this way only one switch is necessary for controlling and enabling/disabling access to a number of devices on the bus, depending on the information contained in the switch.

The switches may also comprise crypto means for encrypting and decrypting data from and to the different devices and the processor of the security device, we will not discuss the case with the communication between the security device and a device is protected with crypto means further. Reference is made to WO 98/19243 for more information regarding this.

During normal operation the main processor has access to and communicates with most devices and memories of the computer via the different buses and bridges, i e normal mode. During normal operation, the switches control and denies access to the resources that are only allocated to the security device, as specified in the switches.

When a security critical activity is ordered, which could be initiated by the processor or an IO device, the security device is activated. Depending on the type of security critical activity, certain information and programs are transferred from the ROM of the security device to its processor to perform certain tasks before the security critical activity commences, i e putting the computer in a secure management mode. Signals from SG_{PM} are then generated to those switches that are affected by the actual security critical activity.

One example is if the security critical activity requires temporary memory space, a PM- signal is sent by the security device processor to the switch arranged at the connection of the main memory. In order to ensure that information written and read in the main memory during the security critical activity is not compromised, a certain area of the main memory may be allocated to the processor of the security device only.

A further example is if the security device requires a large program or large volumes of information to perform a security critical activity. In that case a switch in the connection of for example the IDE bus may be activated. As with the main memory, certain areas of the hard disk drive may be allocated to the security device only. This measure ensures that the security device only can access and deliver data from and to that area of the hard disk drive, ensuring that the information cannot be compromised.

According to the invention switches may be built in at suitable locations and for different devices, internal as well as IO devices. The switch function may be of different types depending on the type of device and function, such as access only by the security device, as described above, access only by the computer processor or access by the security device if the computer is in the secure management mode.

It is to be noted that even though the computer processor has-been mentioned above as the main source of requests to different sources, apart from the security device, there may be other processors in a modem computer since the design of the computer tends to be more and more distributed. There may for instance be PCI cards containing processors that are able of reading/writing to any part of the memory. Also, the processor unit of the computer may comprise more than one processor, in which case it is important that a switch is located at the connection between the APIC bus and the Host/PCI bridge, since the APIC bus handles many interrupt requests.

It is therefor important that the security device is able of controlling more sources than the computer processor in order to prevent an attacker from circumvent the security system by changing the content of the operating system of the PCI card. A function of the security device may be a plug and play function, i e the security device locates and identifies all sources connected to the computer in order to be able to control them. In this way, a distributed MMU-like function is obtained, providing a greater robustness against security loop holes. However, writing information to the switches shall still only be able to be performed by the security device processor, and allocation requests of resources have to be sent to the security device processor for approval.

In this respect it is to be noted that the information contained in the different switches, such as addresses and accessibility by which processor and in which situation is arranged depending on the actual resource -es that the actual switch controls. It is also to be noted that the security device activates different switches to different resources depending on the actual security critical activity to be performed.

It is obvious that interrupt signals generated by allocated resources are redirected by the switch to the security device processor. Support functions such as DMA functions and timers are handled in a similar way, and their operation have in some cases to be controlled by a switch function so as to prevent them from being used by the computer processor illegally. These problems are well known to a man skilled in the art.

It shall also be noted that the computer configuration described and shown is only an example. There may be a wide variety of other configurations and arrangements with the same function. In that sense it should be understood that the bridges may be one and the same, that the computer may or may not have all the different buses described, that the screen controller may be connected to the AGP, the ISA or the PCI bus, that the keyboard, floppy and mouse may be connected to other buses such as the USB.

## Claims

1. System for processing a security critical activity in a secure management mode in a computer, which computer comprises a processor (10), peripherals (20,28-38), memory storage means (14,42), hereafter named resources; that the system comprises a security device (50) comprising a processor (52) and signal generators (SG_{PM}, SG_{A}), a number of control means, hereafter named switches (60), with signal receivers (SR_{A}, SR_{PM}) arranged respectively between the security device and pre-selected resources, that the switches contain information regarding accessibility to and from the resources, or parts of the resources, hereafter named resource ranges, wherein, when a switch receives a first signal, together with new information (addresses, operation, data), the security device is able to alter the content of the information of that switch **characterised in that** the security processor (52) is arranged to execute the security critical activity, **in that** the switches control requests from the computer processor (10) to the resources or resource ranges depending on the information contained in the switches, and **in that** in response to a call from the computer processor or the peripherals, the switches are activated by receiving a second signal from the security device, granting the security device access to and from the resources or resource ranges selected by the security device, and denying the computer processor access to and from the resources or resource ranges selected by the security device, **in that** the second signal can be generated only by the security device.

2. System according to claim 1, **characterised in that** the information contained in the switches controls access to resources for requests from other possible processors contained in or connected to the computer.

3. System according to claim 1, **characterised in that** the switches comprise a signal receiver (SR_{S}) by which it can detect which source is handling the computer, and that the switches compares this with the resource which requests access to a resource or resource range controlled by the switches, and depending on the information in the switches, enables or denies access to that resource.

4. System according to claim 1, **characterised in that** the information in the switches enables the switches to control certain areas of the memory means are allocated to be accessed by the processor of the security device only.

5. System according to claim 1, **characterised in that** the information in the switches enables the switches to control that certain resources are accessible by the computer processor when not in secure management mode, and only accessible by the security device when in secure management mode.

6. System according to claim 1, **characterised in that** the switches are hardware switches.

## Patentansprüche

1. System zum Verarbeiten einer sicherheitskritischen Aktion in einem Sicherheitsmanagementmodus in einem Computer, wobei der Computer einen Prozessor (10), Peripheriegeräte (20, 28 - 38), Speichereinrichtungen (14, 42), im Folgenden Quellen genannt, aufweist, wobei das System eine Sicherheitsvorrichtung (50) hat, welche einen Prozessor (52) und Signalgeneratoren (SG_{PM}, SG_{A}) und eine Anzahl von Steuereinrichtungen, im Folgenden Schalter (60) genannt aufweist, wobei Signalempfänger (SR_{A}, SR_{PM}) entsprechend zwischen der Sicherheitseinrichtung und den vorausgewählten Quellen angeordnet sind, wobei die Schalter Informationen betreffend die Zugänglichkeit zu und von den Quellen oder Teilen der Quelle, Im Folgenden Quellenbereiche genannt, haben, wobei, wenn ein Schalter ein erstes Signal zusammen mit neuer Information (Adressen, Betrieb, Daten) empfängt die Sicherheitsvorrichtung geeignet ist, den Inhalt der Information dieses Schalters zu ändern, **dadurch gekennzeichnet, dass** der Sicherheitsprozessor (52) so eingerichtet ist, dass er die sicherheitskritische Aktion durchführt, indem die Schalten Anfragen von dem Computerprozessor (10) an die Quellen oder Quellenbereiche, abhängig von der Information, welche in den Schaltern enthalten ist, steuert, und dass in Reaktion auf einen Anruf von den Computerprozessor oder den Peripheriegeräten die Schalter durch Empfangen eines zweiten Signals von der Sicherheitsvorrichtung, welche der Sicherheitsvorrichtung einen Zugang zu und von den Quellen oder Quellenbereichen erlauben, welche von der Sicherheitsvorrichtung ausgewählt sind, betätigt werden und dem Computerprozessor einen Zugang zu und von den Quelle oder Quellenbereichen, welche von der Sicherheitsvorrichtung ausgewählt sind, verweigern, indem das das zweite Sicherheitssignal nur von der Sicherheitsvorrichtung erzeugt werden kann.

2. System nach Anspruch 1, **dadurch gekennzeichnet, dass** die in den Schaltern enthaltene Information den Zugang zu Quelle für Abfragen von anderen möglichen Prozessoren, welche in dem Computer enthalten oder mit dem Computer verbunden sind, steuert.

3. System nach Anspruch 1, **dadurch gekennzeichnet, dass** die Schalter einen Signalempfänger (SR_{S}) aufweisen, mittels welchem sie feststellen können, welche Quelle den Computer handhabt, und dass die Schalter dies mit der Quelle vergleichen, welche einen Zugang zu einer Quelle oder einem Quellenbereich wünscht, welcher durch die Schalter gesteuert ist, und, abhängig von der Information in den Schaltern, einen Zugang zu der Quelle ermöglicht oder verweigert.

4. System nach Anspruch 1, **dadurch gekennzeichnet, dass** die Information in den Schaltern die Schalter befähigt, zu steuern, dass bestimmte Bereiche der Speichereinrichtung bereit gestellt sind, sodass sie nur von dem Prozessor der Sicherheitsvorrichtung zugänglich sind.

5. System nach Anspruch 1, **dadurch gekennzeichnet, dass** die Information in den Schaltern die Schalter befähigt, zu steuern, dass bestimmte Bereiche von dem Computerprozessor zugänglich sind, wenn kein Sicherheitsmanagementmodus vorliegt, und nur von der Sicherheitsvorrichtung zugänglich sind, wenn ein Sicherheitsmanagementmodus vorliegt.

6. System nach Anspruch 1, **dadurch gekennzeichnet, dass** die Schalter Hardware-Schalter sind,

## Revendications

1. Système de traitement informatique d'une activité critique en matière de sécurité dans un mode de gestion sécurisé à l'intérieur d'un ordinateur, cet ordinateur comprenant un processeur (10), des périphériques (20, 28-30), des moyens de stockage en mémoire (14, 42) appelés ci-après ressources ; le système comportant un dispositif de sécurité (50) comprenant un processeur (52) et des générateurs de signaux (SG_{PM}, SG_{A}), un certain nombre de moyens de commande appelés ci-après commutateurs (60), avec des récepteurs de signaux (SR_{A}, SR_{PM}) disposés respectivement entre le dispositif de sécurité et des ressources présélectionnées, les commutateurs contenant des informations relatives à l'accessibilité d'entrée et de sortie des ressources, ou de parties des ressources, qu'on appellera ci-après plages de ressources, de façon que, lorsqu'un commutateur reçoit un premier signal, en même temps qu'une nouvelle information (adresses, opération, données), le dispositif de sécurité soit capable de modifier le contenu des informations de ce commutateur,
**caractérisé en ce que**
- le processeur de sécurité (52) est disposé pour exercer l'activité critique en matière de sécurité ;
- les commutateurs commandent les demandes transmises par le processeur (10) de l'ordinateur aux ressources ou aux plages de ressources, suivant les informations contenues dans ces commutateurs ; et
- en réponse à un appel provenant du processeur d'ordinateur ou des périphériques, les commutateurs sont actionnés en recevant un second signal provenant du dispositif de sécurité, ce second signal accordant l'accès du dispositif de sécurité à l'entrée et à la sortie des ressources ou des plages de ressources sélectionnées par ce dispositif de sécurité, et refusant l'accès du processeur d'ordinateur à l'entrée et à la sortie des ressources ou des plages de ressources sélectionnées par le dispositif de sécurité ;
- le second signal pouvant être généré uniquement par le dispositif de sécurité.

2. Système selon la revendication 1,
**caractérisé en ce que**
les informations contenues dans les commutateurs commandent l'accès aux ressources pour des demandes provenant d'autre processeurs possibles contenus dans l'ordinateur ou connectés à celui-ci.

3. Système selon la revendication 1,
**caractérisé en ce que**
les commutateurs comprennent un récepteur de signaux (SR_{S}) qui leur permet de détecter laquelle des sources est en cours de traitement par l'ordinateur ; et
les commutateurs comparent cela à la ressource qui demande l'accès à une ressource ou à une plage de ressources commandée par les commutateurs, de manière à accorder ou à refuser l'accès à cette ressource suivant les informations contenues dans les commutateurs.

4. Système selon la revendication 1,
**caractérisé en ce que**
les informations contenues dans les commutateurs permettent à ces commutateurs de commander certaines zones des moyens de mémoire auxquelles ne peut accéder que le processeur du dispositif de sécurité seulement.

5. Système selon la revendication 1,
**caractérisé en ce que**
les informations contenues dans les commutateurs permettent à ces commutateurs de contrôler que certaines ressources sont accessibles par le processeur de l'ordinateur lorsqu'il n'est pas en mode de gestion sécurisé, et ne sont accessibles par le dispositif de sécurité que lorsqu'il est en mode de gestion sécurisé.

6. Système selon la revendication 1,
**caractérisé en ce que**
les commutateurs sont des commutateurs matériels.
